# EUROPÄISCHE PATENTSCHRIFT

(11) **EP 2 621 257 B1**
(45) Veröffentlichungstag und Bekanntmachung des Hinweises auf die Patenterteilung: **14.06.2017**
(21) Anmeldenummer: 11761565.8
(22) Anmeldetag: 21.09.2011
(51) Int. Cl.: A01B 69/00

(54) **KOMBINATION AUS EINEM ZUGFAHRZEUG UND EINEM GERÄT**
COMBINATION OF A TRACTOR AND AN IMPLEMENT
COMBINAISON CONSTITUÉE D'UN VÉHICULE TRACTEUR ET D'UN APPAREIL

(30) Priorität: 01.10.2010 DE 102010041885
(43) Veröffentlichungstag der Anmeldung: 07.08.2013
(73) Patentinhaber: Deere & Company, Moline, IL 61265 (US)
(72) Erfinder: KORMANN, Georg, 66482 Zweibrücken (DE); VOLLMAR, Uwe, 66482 Zweibrücken (DE)
(74) Vertreter: Holst, Sönke
(86) Internationale Anmeldenummer: PCT/EP2011/066409
(87) Internationale Veröffentlichungsnummer: WO 2012/041743

(56) Entgegenhaltungen:
- EP-A1- 0 060 956
- EP-A1- 1 336 549
- FR-A1- 2 492 331
- US-A1- 2004 124 605
- US-A1- 2008 004 778

## Beschreibung

Die Erfindung betrifft eine Kombination aus einem Zugfahrzeug und einem mittels einer Deichsel, die um die Hochachse schwenkbar am Zugfahrzeug angelenkt ist, vom Zugfahrzeug gezogenen, durch Räder auf dem Erdboden abgestützten Gerät, an dem die Deichsel um die Hochachse schwenkbar angelenkt ist und welches ein Bearbeitungselement zur Bearbeitung eines Felds umfasst, mit einer Steuereinrichtung, durch die ein erster Aktor ansteuerbar ist, mit dem die Position der Deichsel gegenüber dem Gerät veränderbar ist, und die mit einem zweiten Aktor verbunden ist, der zur Verstellung des Winkels eines oder mehrerer der Räder des Geräts um die Hochachse eingerichtet ist.

### Stand der Technik

In der Landwirtschaft liegen vielfach Anwendungsfälle vor, in denen gezogene Geräte hinter Zugfahrzeugen hergezogen werden und es beabsichtigt ist, die Geräte auf einem gewünschten Sollweg zu bewegen, um beispielsweise Erntegut von einem Feld aufzunehmen, den Boden eines Feldes mechanisch zu bearbeiten oder Materialien auf einem Feld auszubringen. Üblicherweise wird das Zugfahrzeug durch einen Fahrer gelenkt und das mittels einer Deichsel an einer Kupplung des Zugfahrzeugs angehängte Gerät folgt dem Zugfahrzeug. Insbesondere bei größeren Zugfahrzeugen und Geräten wird aufgrund der Abmessungen der Zugfahrzeug/Gerät-Kombination, insbesondere der Länge der Deichsel des Geräts, beim Wenden im Vorgewende relativ viel Platz benötigt, sodass das Vorgewende entsprechend groß zu gestalten ist und entsprechend viel Fläche des Felds für die landwirtschaftliche Nutzung verloren geht. Außerdem wird dabei auf dem relativ oft befahrenen Vorgewende der Boden in unerwünschter Weise verdichtet. Bemühungen, das Vorgewende durch größere Lenkwinkel des Zugfahrzeugs zu verkürzen, können zu Beschädigungen führen, wenn die Deichsel oder das Gerät mit dem Zugfahrzeug kollidieren.

Es wurde vorgeschlagen, eine Ballenpresse mit einer lenkbaren Deichsel oder lenkbaren Rädern auszustatten, um sie selbsttätig in seitlicher Richtung über einen Schwad zu lenken und möglichst zylindrische Ballen zu erhalten (US 4 433 533 A).

Weiterhin sind auch Anbaugeräte mit elektromotorisch angetriebenen Rädern bekannt (DE 196 23 738 A1). Der Antrieb der Räder erfolgt entsprechend der Ackermann-Bedingung, d.h. alle Räder übertragen gleiche Kräfte.

Die DE 197 46 927 A1 schlägt ein Bodenbearbeitungsgerät vor, bei dem die Deichsel schwenkbar am Rahmen des Geräts angebracht ist und die Bewegung der Deichsel auf mechanische, elektrische oder hydraulische Weise auf ein lenkbares Hauptrad übertragen wird. Dabei erfolgt der Ausschlag des Hauptrads in die Richtung, in welche sich die Deichsel bewegt, was zu einer Verbesserung der Kurvenfahreigenschaften führt. Die als gattungsbildend angesehene EP 1 336 549 A1 beschreibt eine gezogene landwirtschaftliche Verteilmaschine mit einer zwangsgelenkten Deichsel und durch zugeordnete Aktoren gelenkten Rädern, die mittels einer Steuerung derart angesteuert werden, dass das Gerät genau der Spur des Traktors folgt. Der Wendekreis des Geräts wird durch beide Lösungen jedoch nicht positiv, d. h. im Sinne einer Verkleinerung, beeinflusst, insbesondere wenn Bereiche des Geräts mit dem Traktor kollidieren können.

Schließlich sind in der US 2004/0124605 A1 Kupplungen an Traktoren vorgeschlagen worden, die durch einen Aktor aktiv in seitlicher Richtung verstellt werden, um das Gerät auf einem Sollweg zu bewegen und beispielsweise an Seitenhängen den hangabwärtigen Schlupf auszugleichen. Beim Wenden im Vorgewende eines Feldes wird die Kupplung selbsttätig zur kurvenäußeren Seite bewegt. Dadurch kann das Gerät zwar weiter außen geführt werden als ohne verstellbare Kupplung; der vom Gerät erreichte Radius kann aber nicht nennenswert größer als der des Traktors werden, denn anderenfalls würden die Räder des Geräts zu schräg zur Vorwärtsrichtung stehen.

### Aufgabe der Erfindung

Die der Erfindung zu Grunde liegende Aufgabe wird darin gesehen, eine Kombination aus einem Zugfahrzeug und einem gezogenen Gerät mit einem verkleinerten Wendekreis am Feldende bereitzustellen.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Eine Kombination setzt sich aus einem Zugfahrzeug und einem vom Zugfahrzeug gezogenen Gerät zusammen. Das Gerät wird durch eine Deichsel vom Zugfahrzeug gezogen, ist durch Räder auf dem Erdboden abgestützt und umfasst wenigstens ein mit einem Feld zusammenwirkendes Bearbeitungselement, beispielsweise einen Gutaufnehmer, Bodenbearbeitungswerkzeuge oder ein Sprühgestänge. Weiterhin ist eine Steuereinrichtung vorhanden, die sich an Bord des Zugfahrzeugs oder des Geräts befinden oder räumlich über beide verteilt sein kann. Die Steuereinrichtung ist mit einem ersten Aktor verbunden, der zur Verstellung des Winkels zwischen der Deichsel und dem Gerät dient. Der erste Aktor kann (zur direkten Verstellung der Deichsel gegenüber dem Gerät) zwischen der Deichsel und einem Fahrgestell des Geräts oder (zur indirekten Verstellung der Deichsel gegenüber dem Gerät) zwischen dem Zugfahrzeug und der Deichsel angeordnet sein. Die Steuereinrichtung steuert den Aktor aktiv in einer Weise an, dass das Gerät beim Befahren von Kurven zur Kurvenaußenseite bewegt wird. Die Steuereinrichtung ist mit einem zweiten Aktor gekoppelt, der zur Lenkung der Räder dient, d. h. zur Verstellung ihres Winkels um die Hochachse. Die Steuereinrichtung lenkt die Räder ebenfalls in Richtung auf das Kurvenäußere. Dabei kann ein einziger Aktor mehreren (zwei oder mehr) Rädern zugeordnet, d. h. damit mechanisch verbunden sein, oder jedem Rad ist ein eigener Aktor zugeordnet, wobei die Aktoren dann durch die Steuereinrichtung synchron oder jeweils unterschiedlich angesteuert werden können.

Auf diese Weise erreicht man, dass der Wendekreis des Geräts näherungsweise dem Wendekreis des Zugfahrzeugs entspricht, sodass letzteres beim Wenden im Vorgewende nicht mehr - wie bei im Stand der Technik gebräuchlichen, passiv gelenkten Geräten - darauf Rücksicht nehmen muss, dass das Gerät kleinere Bögen als das Zugfahrzeug beschreibt und zur Vermeidung von Kollisionen deshalb größere Wendekreise als möglich beschreiben muss, sondern demgegenüber engere Kurven fahren kann. Mit anderen Worten wird das Gerät durch die aktive Ansteuerung der Deichsel in eine Position in das Kurvenäußere verbracht, in der Kollisionen mit dem Zugfahrzeug nicht zu befürchten sind.

Die Räder des Geräts können aktiv angetrieben werden, sei es mittels eines mechanischen Antriebsstrangs vom Zugfahrzeug oder durch zugeordnete Elektro- oder Hydromotore. Alternativ oder zusätzlich können sie mit Bremsen ausgestattet sein. Vorzugsweise sind die Antriebe und/oder Bremsen der auf beiden Seiten des Geräts angeordneten Räder durch die Steuereinrichtung in einer Weise unterschiedlich ansteuerbar, dass sie eine Lenkbewegung unterstützen. Wenn die Räder nach rechts gelenkt werden, dreht das linke Rad demnach schneller als das rechte Rad, welches im Extremfall sogar rückwärts drehen kann, um den erwünschten Lenkeffekt zu erreichen. Analog können die Bremsen diese Lenkbewegung unterstützen.

Bei einer einfachen Ausführungsform der Erfindung wird der Lenkwinkel des Zugfahrzeugs durch den Bediener vorgegeben, üblicherweise durch ein Lenkrad. Die Steuereinrichtung kann den Lenkwinkel mittels eines Sensors erfassen und den ersten und ggf. zweiten Aktor unter Berücksichtigung des vom Lenkwinkel ansteuern. Andererseits besteht auch die Möglichkeit, das Zugfahrzeug mit einer selbsttätigen Lenkeinrichtung auszustatten, die das Zugfahrzeug selbsttätig entlang eines Sollwegs führt. Dazu kann eine separate Lenksteuereinheit oder die Steuereinrichtung mit Daten für einen Sollweg, z. B. einer abgespeicherten Karte mit einem Wegplan, und mit Daten hinsichtlich der aktuellen Position des Zugfahrzeugs beaufschlagt werden und eine Lenkeinrichtung des Zugfahrzeugs mit Lenksignalen versorgen. Diese Lenkdaten stehen dann auch der Steuereinrichtung zur Verfügung, um basierend auf ihnen (bzw. der Position des Geräts oder Zugfahrzeugs) den ersten und ggf. zweiten Aktor anzusteuern.

Weiterhin ist die Steuereinrichtung zweckmäßigerweise mit Rückkopplungssensoren zur Erfassung der Stellung der Aktoren und/oder der Räder und/oder der Deichsel und/oder einer am Gerät angebrachten Positionsbestimmungseinrichtung verbunden und steuert den ersten und/oder zweiten Aktor abhängig von den Signalen mindestens eines der erwähnten Rückkopplungssensoren an. Es wird demnach eine geschlossene Regelschleife bereitgestellt, die sicherstellt, dass sich das Gerät auch tatsächlich auf einem gewünschten Weg bewegt. Durch die Rückkopplung mit der am Gerät angebrachten Positionsbestimmungseinrichtung ist auch bei ungünstigen Bodenverhältnissen gewährleistet, dass ein gewünschter Weg eingehalten wird. Weiterhin kann die Steuereinrichtung auch mit einem Sensor zur Erfassung der Seitenhangneigung verbunden werden, um durch eine entsprechende Ansteuerung des ersten und/oder zweiten Aktors den hangabwärtigen Schlupf auszugleichen. Die Signale des Sensors zur Seitenhangneigungserfassung können auch in an sich bekannter Weise zum Ausgleich eines vertikalen Versatzes zwischen der Positionsbestimmungseinrichtung des Geräts und dem Erdboden dienen.

Die Steuereinrichtung kann den ersten und ggf. zweiten Aktor permanent, d. h. während der gesamten Feldarbeit abhängig vom Lenkwinkel des Zugfahrzeugs ansteuern. Es wäre auch möglich, diese Ansteuerung durch einen Bediener ein- und ausschaltbar zu gestalten, oder sie selbsttätig (insbesondere basierend auf einer Positionsbestimmungseinrichtung und einem Plan des Felds) nur bei Befahren eines Vorgewendes einzuschalten und ansonsten auszuschalten. Bei einer ausgeschalteten lenkwinkelabhängigen Ansteuerung der Aktoren bietet es sich an, den ersten und ggf. zweiten Aktor selbsttätig in eine Neutralstellung für Geradeausfahrt zu verbringen. Diese Stellung ist auch beim Rückwärtsfahren und beim Fahren auf einer Straße sinnvoll, insbesondere bei mehreren, hintereinander gehängten Geräten und kann ggf. durch Bedienereingabe oder selbsttätig ausgewählt werden.

Wenn das Zugfahrzeug und das Gerät am Feldende wenden, bewegt sich das Gerät zunächst noch auf dem Feld in eine Geradeausrichtung, während das Zugfahrzeug schon das Vorgewende erreicht und eine Lenkbewegung vollführt. Der erste und ggf. zweite Aktor werden jedoch erst verstellt, wenn auch das Gerät das Vorgewende erreicht hat. Aus diesen Gründen ist steuert die Steuereinrichtung den ersten und ggf. zweiten Aktor vorzugsweise gegenüber der Lenkbewegung des Zugfahrzeugs zeitlich bzw. örtlich verzögert an. Die Ansteuerung kann basierend auf einer Wegmessung und einer Berücksichtigung des Abstands zwischen den Vorderrädern des Zugfahrzeugs und dem Gerät erfolgen, oder auf einer Positionserfassung des Geräts oder auf einer Erfassung der Zeit zwischen dem Erreichen des Vorgewendes durch das Zugfahrzeug und das Gerät.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf ein Zugfahrzeug mit einem gezogenen Gerät,
- Fig. 2: eine Draufsicht auf das Zugfahrzeug und das Gerät beim Wenden im Vorgewende und
- Fig. 3: eine Draufsicht auf das Zugfahrzeug und das Gerät beim Wenden im Vorgewende mit einer Rückwärtsfahrt.

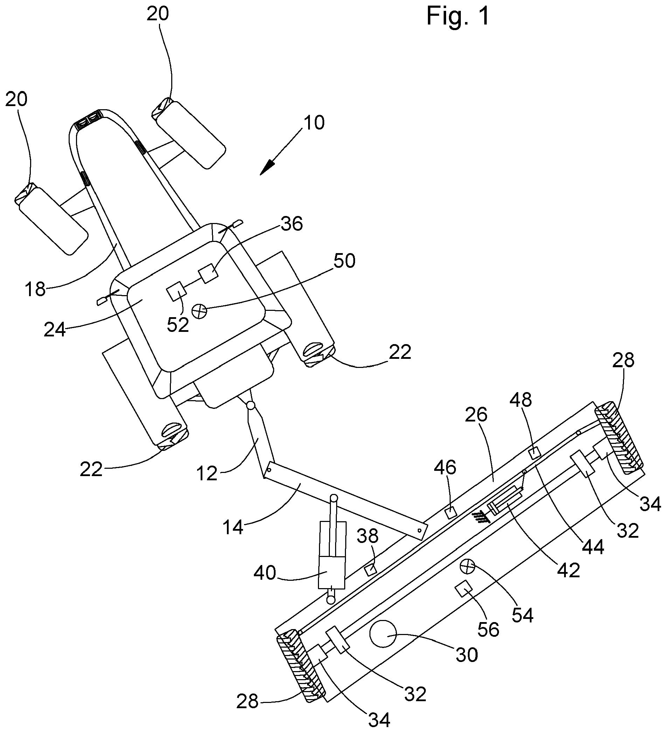

Die Figur 1 zeigt eine Draufsicht auf ein landwirtschaftliches Zugfahrzeug 10 in Form eines Traktors und eines mittels einer Deichsel 14 um die Hochachse schwenkbar an eine Anhängekupplung 12 des Zugfahrzeugs 10 gekoppelten Geräts 16 in Form eines Bodenbearbeitungsgeräts beliebiger Art. Das Zugfahrzeug 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz befindet.

Das Gerät 16 umfasst ein Fahrgestell 26, das sich über lenkbare Räder 28 auf dem Erdboden abstützt und Bearbeitungselemente 30 in Form von Kreiseleggen zur Bearbeitung des Feldbodens. Der mechanische Antrieb der Bearbeitungselemente 30 des Geräts 16 folgt über eine Zapfwelle vom Zugfahrzeug 10 her, obwohl auch ein Antrieb durch Elektromotore denkbar wäre, die vom Zugfahrzeug 10 her mit elektrischer Energie versorgt werden. Auch die Räder 28 werden durch Elektromotore 32 über Gelenkwellen 34 angetrieben.

Eine Steuereinrichtung 36 (die als Anzeigeeinrichtung bzw. Bordcomputer ausgeführt sein könnte) befindet sich an Bord des Zugfahrzeugs 10, könnte aber auch an Bord des Geräts 16 lokalisiert sein. Die Steuereinrichtung 36 ist über eine Ventilanordnung 38 mit einem ersten Aktor 40 in Form eines Hydraulikzylinders verbunden, der einen Endes an der um die Hochachse schwenkbar am Gerät 16 angelenkten Deichsel 14 und anderen Endes am Fahrgestell 26 angelenkt ist. Die Steuereinrichtung 36 ist über die Ventilanordnung 56 außerdem mit einem zweiten Aktor 42 in Form eines Hydraulikzylinders verbunden, der mit einer Stange 44 zur Verschwenkung der Räder 28 des Geräts 16 um die Hochachse gekoppelt ist. Durch Rückkopplungssensoren 46, 48 wird die Steuereinrichtung 36 über die aktuellen Winkel der Deichsel 14 und der Räder 28 informiert.

Auf dem Dach der Kabine 24 des Zugfahrzeugs 10 ist eine Positionsbestimmungseinrichtung 50 in Form einer Antenne zum Empfang eines satellitenbasierten Positionsbestimmungssystems (z. B. GPS) angebracht, die mit der Steuereinrichtung 36 verbunden ist, welche ein Lenksignal an eine Lenkeinrichtung 52 des Zugfahrzeugs abgibt, die wiederum die lenkbaren Vorderräder 20 des Zugfahrzeugs 10 über einen geeigneten Aktor (nicht gezeigt) in einer Weise verstellt, dass die Längsmittelachse des Zugfahrzeugs 10 zumindest näherungsweise auf einer Solllinie geführt wird. Eine weitere Positionsbestimmungseinrichtung 54 befindet sich auf dem Gerät 16 auf dessen Längsmittelachse. Die Positionsbestimmungseinrichtung 54 ist, wie ein Seitenneigungssensor 56 des Geräts 16, mit der Steuereinrichtung 36 verbunden. Die Positionsbestimmungseinrichtung 50 könnte auch lokal arbeiten, d. h. mit einer Kamera oder einem Laserentfernungsmesser das Feld erfassen und eine geeignete Auswertungssoftware unterscheidet zwischen bearbeiteten und unbearbeiteten Bereichen des Feldes. Die Positionsbestimmungseinrichtung 54 könnte auch entfallen, wenn ein Sensor den Winkel zwischen der Deichsel 14 und der Anhängekupplung 12 erfasst.

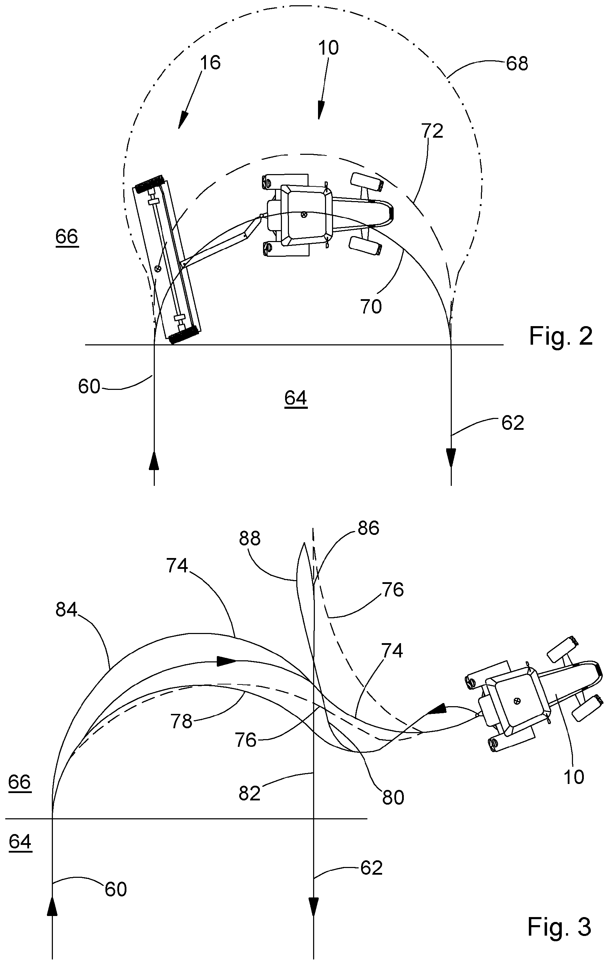

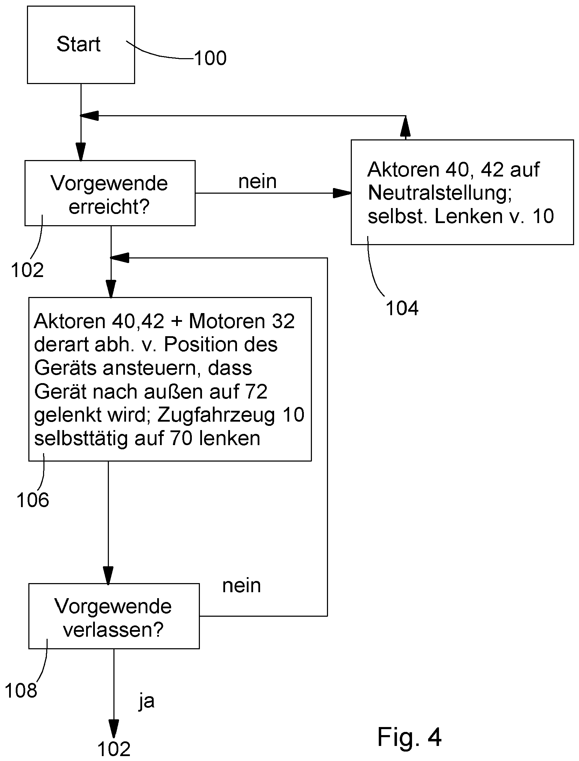

Die Arbeitsweise der Steuereinrichtung 36 wird nun anhand der Figuren 2 und 4 erläutert. In der Figur 2 sind zwei parallele Spuren 60, 62 auf einem Feld und der Wendevorgang des Zugfahrzeugs 10 mit dem Gerät 16 in einem Vorgewende 66 gezeigt. Mit 68 ist eine bisher übliche Spur eines Zugfahrzeugs 10 mit einem konventionellen, d. h. nicht aktiv gelenkten Gerät 16 gekennzeichnet. Die Spur 68 ist schlüssellochförmig und beschreibt einen relativ großen Kreis, der verhindert, dass das gezogene Gerät 16, das einen engeren Kreis als das Zugfahrzeug 10 beschreibt, mit letzterem kollidiert.

Die Figur 4 zeigt ein Flussdiagramm, nach dem die Steuereinrichtung 36 beim Wenden am Feldende arbeitet. Nach dem Start im Schritt 100 wird zunächst anhand der mit der Positionsbestimmungseinrichtung 50 erfassten Position des Zugfahrzeugs 10 und einem abgespeicherten Plan des Feld 64, des Vorgewendes 66 und der zu befahrenden Spuren 60, 62 abgefragt, ob das Zugfahrzeug 10 schon das Vorgewende 66 erreicht hat. Ist das nicht der Fall, folgt der Schritt 104, in dem die Aktoren 40, 42 auf ihre Neutralstellung für Geradeausfahrt des Geräts 16 gestellt werden und das Zugfahrzeug 10 durch die Lenkeinrichtung 52 auf der Spur 60 geführt wird.

Wird im Schritt 102 festgestellt, dass das Zugfahrzeug 10 das Vorgewende 66 erreicht hat, folgt der Schritt 106, in dem die Signale der Positionsbestimmungseinrichtung 54 dazu verwendet werden, das Gerät 16 durch Ansteuerung der Aktoren 40, 42 (und ggf. unterschiedliche Ansteuerung der beiden Motoren 32 des Geräts) auf einem etwa kreisförmigen Weg 72 durch das Vorgewende 66 zu führen, der einen geringfügig größeren Radius aufweist als ein näherungsweise kreisförmiger Weg 70, auf dem das Zugfahrzeug 10 selbsttätig anhand der Signale des Positionsbestimmungssystems 50 geführt wird. Das Gerät 10 wird durch den Aktor 40 und die Deichsel 14 demnach in Richtung des Kurvenäußeren bewegt, wie auch durch die Lenkung der Räder 28 mittels des Aktors 42 (vgl. die Stellungen in der Figur 1: bei einer Lenkbewegung des Zugfahrzeugs 10 nach links lenken die Räder 28 nach rechts und auch die Deichsel 14 wird nach rechts bewegt) und vorzugsweise der Drehzahlsteuerung der Motoren 32. Dabei werden die Signale der Rückkopplungssensoren 46 und 48 verwendet, die Aktoren 40, 42 in jeweils abgespeicherte, anhand der jeweiligen Position entlang des Wegs 72 aus einem Speicher der Steuereinrichtung 36 abgerufenen Stellungen zu verbringen. Auf diese Weise wird eine Kollision mit dem Zugfahrzeug 10 vermieden und es können kleinere Wendekreise 70, 72 als im Stand der Technik befahren werden.

Es sei noch angemerkt, dass die Bearbeitungselemente 30 im Vorgewende 66 ausgehoben werden können, dazu können sie gegenüber dem Fahrgestell 26 durch Aktoren (nicht gezeigt) angehoben und/oder das Fahrgestell 26 gegenüber dem Erdboden durch Anheben der Räder 28 mittels Aktoren (nicht gezeigt) angehoben werden. Analog werden die Bearbeitungselemente 30 beim Wiedererreichen des Felds 64 wieder in die Betriebsstellung verbracht.

An den Schritt 106 schließt sich der Schritt 108 an, in dem abgefragt wird, ob das Vorgewende 66 verlassen wurde. Ist das nicht der Fall, folgt wieder Schritt 106, anderenfalls der Schritt 102.

Die Signale des Neigungssensors 56 werden einerseits verwendet, den vertikalen Versatz zwischen der Positionsbestimmungseinrichtung 54 und dem Erdboden beim Befahren von Seitenhängen auszugleichen, sodass das Gerät 16 stets auf den Sollwegen 60, 72, 62 bewegt wird, andererseits wird ein durch den Seitenhang bedingtes Abrutschen des Geräts ausgeglichen, was beim Befahren der Spuren 60, 62 durch eine entsprechende Lenkbewegung des Zugfahrzeugs 10 oder (anders als in der Figur 4 dargestellt) eine geeignete Ansteuerung der Aktoren 40, 42 und/oder der Motoren 32 erfolgen kann.

In der Figur 3 ist ein alternativer Wendevorgang im Vorgewende 66 dargestellt, bei dem das Zugfahrzeug 10 und das Gerät 16 zwischenzeitlich eine Rückwärtsbewegung vollführen. Ein bei einem derartigen Wendevorgang durch ein konventionelles Zugfahrzeug 10 und Gerät 16 ohne aktive Lenkung abgefahrener Weg ist durch 74 (Zugfahrzeug) und 76 (Gerät) gekennzeichnet. Auch hier legt das Gerät 76 einen weiten Weg im Vorgewende 66 in Längsrichtung der Spuren 60, 62 zurück. Die erfindungsgemäßen Wege sind durch 78 bis 82 (Zugfahrzeug 10) und 84 bis 88 (Gerät 16) gekennzeichnet. Sie sind wesentlich kürzer als im Stand der Technik und setzen sich jeweils aus drei Abschnitten zusammen, wobei der zweite Abschnitt 80, 86 rückwärts gefahren wird. Analog zur Ausführungsform nach Figur 2 werden die Aktoren 40, 42 und ggf. die Motoren 32 sowie die Lenkeinrichtung 52 durch die Steuereinrichtung 36 derart angesteuert, dass die gewünschten Wege zurückgelegt werden. Dabei wird das Gerät 16 weiter außen auf den Kurven geführt als das Zugfahrzeug 10. Das Anhalten zwischen den Abschnitten und das Rückwärtsfahren kann der Fahrer des Zugfahrzeugs 10 (nach Erhalt einer entsprechenden optischen oder akustischen Anweisung durch die Steuereinrichtung 36) oder die Steuereinrichtung 36 durch Eingriff in die Antriebssteuerung der Räder 22 durchführen.

## Patentansprüche

1. Kombination aus einem Zugfahrzeug (10) und einem mittels einer Deichsel (14), die um die Hochachse schwenkbar am Zugfahrzeug (10) angelenkt ist, vom Zugfahrzeug (10) gezogenen, durch Räder (28) auf dem Erdboden abgestützten Gerät (12), an dem die Deichsel (14) um die Hochachse schwenkbar angelenkt ist und welches ein Bearbeitungselement (30) zur Bearbeitung eines Felds (64) umfasst, mit einer Steuereinrichtung (36), durch die ein erster Aktor (40) ansteuerbar ist, mit dem die Position der Deichsel (14) gegenüber dem Gerät (16) veränderbar ist, und die mit einem zweiten Aktor (42) verbunden ist, der zur Verstellung des Winkels eines oder mehrerer der Räder (28) des Geräts (16) um die Hochachse eingerichtet ist, **dadurch gekennzeichnet, dass** die Steuereinrichtung (36) betreibbar ist, beim Befahren einer Kurve den ersten Aktor (40) und den zweiten Aktor (42) derart anzusteuern, dass der erste Aktor (40) die Deichsel (14) und somit das Gerät (16) zur Kurvenaußenseite hin verstellt und der zweite Aktor (42) die Räder (28) zur Kurvenaußenseite hin lenkt.

2. Kombination nach Anspruch 1, **dadurch gekennzeichnet, dass** die Räder (28) des Geräts (16) aktiv antreibbar und/oder bremsbar sind.

3. Kombination nach Anspruch 2, **dadurch gekennzeichnet, dass** der Antrieb und/oder die Bremsen der Räder (28) des Geräts (16) durch die Steuereinrichtung (36) im Sinne einer Unterstützung der Lenkbewegung der Deichsel (14) und ggf. der Räder (28) auf beiden Seiten des Geräts (16) unterschiedlich ansteuerbar sind.

4. Kombination nach Anspruch einem der Ansprüche 1 bis 3, **dadurch gekennzeichnet, dass** der Lenkwinkel des Zugfahrzeugs (10) manuell oder selbsttätig vorgebbar ist und die Steuereinrichtung (36) mit einem Signal hinsichtlich des Ist- oder Sollwerts des Lenkwinkels des Zugfahrzeugs (10) beaufschlagbar ist und betreibbar ist, die Aktoren (40, 42) unter Berücksichtigung des Ist- oder Sollwerts des Lenkwinkels und/oder einer aktuellen Position des Geräts (16) oder Zugfahrzeugs (10) anzusteuern.

5. Kombination nach Anspruch 4, **dadurch gekennzeichnet, dass** die Steuereinrichtung (36) mit einer Sollweginformation und durch eine Positionsbestimmungseinrichtung (50) mit einer Information hinsichtlich der aktuellen Position des Zugfahrzeugs (10) beaufschlagbar ist.

6. Kombination nach einem der Ansprüche 1 bis 5, **dadurch gekennzeichnet, dass** die Steuereinrichtung (36) mit Rückkopplungssensoren (46, 48) zur Erfassung der Stellung der Aktoren (40, 42) und/oder der Räder (28) und/oder und der Deichsel (14) verbunden und betreibbar ist, den ersten und/oder zweiten Aktor (40, 42) abhängig von den Signalen mindestens eines der erwähnten Rückkopplungssensoren (46, 48) anzusteuern.

7. Kombination nach einem der Ansprüche 1 bis 7, **dadurch gekennzeichnet, dass** die Steuereinrichtung (36) mit einem Sensor (56) zur Erfassung der Seitenhangneigung verbunden und betreibbar ist, den ersten und/oder zweiten Aktor (40, 42) abhängig von den Signalen des Sensors (56) anzusteuern.

8. Kombination nach einem der Ansprüche 1 bis 7, **dadurch gekennzeichnet, dass** die Steuereinrichtung (36) betreibbar ist, den ersten und zweiten Aktor (40, 42) permanent oder abhängig von einer Bedienereingabe oder selbsttätig nur bei Befahren eines Vorgewendes (66) unter Berücksichtigung des Lenkwinkels des Zugfahrzeugs anzusteuern und den ersten und zweiten Aktor (40, 42) anderenfalls in eine Neutralstellung zu verbringen.

9. Kombination nach einem der Ansprüche 1 bis 8, **dadurch gekennzeichnet, dass** die Steuereinrichtung (36) betreibbar ist, den ersten und zweiten Aktor (40, 42) gegenüber einer Lenkung des Zugfahrzeugs (10) zeitlich bzw. örtlich verzögert anzusteuern.

10. Verfahren zum Bewegen einer Kombination aus einem Zugfahrzeug (10) und einem mittels einer Deichsel (14), die um die Hochachse schwenkbar am Zugfahrzeug (10) angelenkt ist, vom Zugfahrzeug (10) gezogenen, durch Räder (28) auf dem Erdboden abgestützten Gerät (12), an dem die Deichsel (14) um die Hochachse schwenkbar angelenkt ist und welches ein Bearbeitungselement (30) zur Bearbeitung eines Felds (64) umfasst, über ein Feld, wobei eine Steuereinrichtung (36) einen ersten Aktor (40) ansteuert, mit dem die Position der Deichsel (14) gegenüber dem Gerät (16) verändert wird und mit einem zweiten Aktor (42) verbunden ist, der den Winkel eines oder mehrerer der Räder (28) des Geräts (16) um die Hochachse verstellt, **dadurch gekennzeichnet, dass** die Steuereinrichtung (36) beim Befahren einer Kurve den ersten Aktor (40) und den zweiten Aktor (42) derart ansteuert, dass der erste Aktor (40) die Deichsel (14) und somit das Gerät (16) zur Kurvenaußenseite hin verstellt und der zweite Aktor (42) die Räder (28) zur Kurvenaußenseite hin lenkt.

## Claims

1. Combination of a tractor (10) and an implement (12) which is pulled by the tractor (10), by means of a draw bar (14) coupled to the tractor (10) so as to be pivotable about the vertical axis, is supported on the ground by wheels (28), to which implement the draw bar (14) is coupled so as to be pivotable about the verical axis and which comprises a cultivating element (30) for cultivating a field (64), with a control device (36) which is usable to activate a first actuator (40) with which the position of the draw bar (14) is changeable in relation to the implement (16), and which control device is connected to a second actuator (42) which is designed for adjusting the angle of one or more of the wheels (28) of the implement (16) about the vertical axis, **characterized in that** the control device (36) can be operated when negotiating a curve in order to activate the first actuator (40) and the second actuator (42) in such a manner that the first actuator (40) moves the draw bar (14) and thus the implement (16) toward the outside of the curve and the second actuator (42) steers the wheels (28) toward the outside of the curve.

2. Combination according to Claim 1, **characterized in that** the wheels (28) of the implement (16) are actively drivable and/or brakeable.

3. Combination according to Claim 2, **characterized in that** the drive and/or the brakes of the wheels (28) of the implement (16) are activatable differently by the control device (36) with the effect of supporting the steering movement of the draw bar (14) and optionally of the wheels (28) on both sides of the implement (16).

4. Combination according to one of Claims 1 to 3, **characterized in that** the steering angle of the tractor (10) is predeteminable manually or automatically and the control device (36) can be acted upon by a signal with regard to the actual or desired value of the steering angle of the tractor (10) and can be operated in order to activate the actuators (40, 42) taking into consideration the actual or desired value of the steering angle and/or a current position of the implement (16) or tractor (10).

5. Combination according to Claim 4, **characterized in that** the control device (36) can be acted upon with desired displacement information and, by means of a position-determining device (50), with information with regard to the current position of the tractor (10).

6. Combination according to one of Claims 1 to 5, **characterized in that** the control device (36) is connected to feedback sensors (46, 48) for detecting the position of the actuators (40, 42) and/or of the wheels (28) and/or the draw bar (14), and can be operated in order to activate the first and/or second actuator (40, 42) depending on the signals of at least one of the above-mentioned feedback sensors (46, 48, 56).

7. Combination according to one of Claims 1 to 7, **characterized in that** the control device (36) is connected to a sensor (56) for detecting the inclination of a lateral slope, and can be operated in order to activate the first and/or second actuator (40, 42) depending on the signals of the sensor (56).

8. Combination according to one of Claims 1 to 7, **characterized in that** the control device (36) can be operated in order to activate the first and the second actuator (40, 42) permanently or depending on an operator input or automatically only when traveling over a headland (66) taking into consideration the steering angle of the tractor and in order otherwise to bring the first and the second actuator (40,42) into a neutral position.

9. Combination according to one of Claims 1 to 8, **characterized in that** the control device (36) can be operated in order to activate the first and the second actuator (40, 42) in a temporally or locally delayed manner in relation to steering of the tractor (10).

10. Method for moving a combination of a tractor (10) and an implement (12) which is pulled by the tractor (10), by means of a draw bar (14) coupled to the tractor (10) so as to be pivotable about the vertical axis, is supported on the ground by wheels (28), to which implement the draw bar (14) is coupled so as to be pivotable about the vertical axis and which comprises a cultivating element (30) for cultivating a field (64), over a field, wherein a control device (36) activates a first actuator (40) with which the position of the draw bar (14) is changed in relation to the implement (16) and is connected to a second actuator (42) which adjusts the angle of one or more of the wheels (28) of the implement (16) about the vertical axis, **characterized in that** the control device (36) when negotiating a curve activates the first actuator (40) and the second actuator (42) in such a manner that the first actuator (40) adjusts the draw bar (14) and thus the implement (16) toward the outside of the curve and the second actuator (42) steers the wheels (28) toward the outside of the curve.

## Revendications

1. Combinaison d'un véhicule tracteur (10) et d'un appareil (12) supporté sur le sol par des roues (28) et tiré par le véhicule tracteur (10) au moyen d'un timon (14) qui est articulé de manière pivotante au véhicule tracteur (10) autour de l'axe vertical, auquel le timon (14) est articulé de manière pivotante autour de l'axe vertical et qui comprend un élément de travail (30) pour le travail d'un champ (64), comprenant un dispositif de commande (36), par lequel un premier actionneur (40) peut être commandé, avec lequel la position du timon (14) peut être modifiée par rapport à l'appareil (16), et qui est raccordé à un deuxième actionneur (42) qui est prévu pour ajuster l'angle d'une ou plusieurs des roues (28) de l'appareil (16) autour de l'axe vertical, **caractérisée en ce que** le dispositif de commande (36) peut fonctionner, lors du passage en virage, pour commander le premier actionneur (40) et le deuxième actionneur (42) de telle sorte que le premier actionneur (40) déplace le timon (14) et par conséquent l'appareil (16) vers le côté extérieur du virage, et que le deuxième actionneur (42) dirige les roues (28) vers le côté extérieur du virage.

2. Combinaison selon la revendication 1, **caractérisée en ce que** les roues (28) de l'appareil (16) peuvent être entraînées et/ou freinées activement.

3. Combinaison selon la revendication 2, **caractérisée en ce que** l'entraînement et/ou les freins des roues (28) de l'appareil (16) peuvent être commandés différemment par le dispositif de commande (36) dans le sens d'un support du déplacement de direction du timon (14) et le cas échéant des roues (28) des deux côtés de l'appareil (16).

4. Combinaison selon l'une quelconque des revendications 1 à 3, **caractérisée en ce que** l'angle de direction du véhicule tracteur (10) est prédéfini manuellement ou automatiquement et le dispositif de commande (36) peut être sollicité et entraîné avec un signal relatif à la valeur instantanée ou de consigne de l'angle de direction du véhicule tracteur (10), de manière à commander les actionneurs (40, 42) en tenant compte de la valeur instantanée ou de consigne de l'angle de direction et/ou d'une position actuelle de l'appareil (16) ou du véhicule tracteur (10).

5. Combinaison selon la revendication 4, **caractérisée en ce que** le dispositif de commande (36) peut être sollicité avec une information de course de consigne et par un dispositif de détermination de position (50) avec une information relative à la position actuelle du véhicule tracteur (10).

6. Combinaison selon l'une quelconque des revendications 1 à 5, **caractérisée en ce que** le dispositif de commande (36) est raccordé à des capteurs de rétroaction (46,48) pour la détection de la position des actionneurs (40, 42) et/ou des roues (28) et/ou du timon (14) et peut fonctionner de manière à commander le premier et/ou le deuxième actionneur (40, 42) en fonction des signaux d'au moins l'un des capteurs de rétroaction (46, 48).

7. Combinaison selon l'une quelconque des revendications 1 à 7, **caractérisée en ce que** le dispositif de commande (36) est raccordé à un capteur (56) pour détecter la pente latérale et peut fonctionner de manière à commande le premier et/ou le deuxième actionneur (40, 42) en fonction des signaux du capteur (56).

8. Combinaison selon l'une quelconque des revendications 1 à 7, **caractérisée en ce que** le dispositif de commande (36) peut fonctionner de manière à commander le premier et le deuxième actionneur (40, 42) de manière permanente ou en fonction d'une entrée par un opérateur ou automatiquement uniquement lors du passage en bout de champ (66) en tenant compte de l'angle de direction du véhicule tracteur, et sinon pour amener le premier et le deuxième actionneur (40, 42) dans une position neutre.

9. Combinaison selon l'une quelconque des revendications 1 à 8, **caractérisée en ce que** le dispositif de commande (36) peut fonctionner de manière à commander le premier et le deuxième actionneur (40, 42) de manière retardée dans le temps ou dans l'espace par rapport à une direction du véhicule tracteur (10).

10. Procédé pour déplacer sur un champ une combinaison d'un véhicule tracteur (10) et d'un appareil (12) supporté sur le sol par des roues (28) et tiré par le véhicule tracteur (10) au moyen d'un timon (14) qui est articulé de manière pivotante au véhicule tracteur (10) autour de l'axe vertical, auquel le timon (14) est articulé de manière pivotante autour de l'axe vertical et qui comprend un élément de travail (30) pour le travail d'un champ (64), un dispositif de commande (36) commandant un premier actionneur (40) avec lequel la position du timon (14) par rapport à l'appareil (16) est modifiée et étant raccordé à un deuxième actionneur (42) qui ajuste l'angle d'une ou plusieurs des roues (28) de l'appareil (16) autour de l'axe vertical, **caractérisé en ce que** le dispositif de commande (36), lors du passage en virage, commande le premier actionneur (40) et le deuxième actionneur (42) de telle sorte que le premier actionneur (40) déplace le timon (14) et par conséquent l'appareil (16) vers le côté extérieur du virage et que le deuxième actionneur (42) guide les roues (28) vers le côté extérieur du virage.
